# EUROPÄISCHE PATENTANMELDUNG

(11) **EP 1 929 885 A1**
(43) Veröffentlichungstag der Anmeldung: **11.06.2008**
(21) Anmeldenummer: 06025004.0
(22) Anmeldetag: 04.12.2006
(51) Int. Cl.: A23L 1/30, A23L 2/00

(54) **Verfahren zur Herstellung von Sterolformulierungen**

(71) Anmelder: Cognis IP Management GmbH, 40589 Düsseldorf (DE)
(72) Erfinder: Horlacher, Peter, Dr., 89287 Bellenberg (DE); Hietsch, Dieter, 89257 Illertissen (DE)
(74) Vertreter: Reinhardt, Jürgen

(57) **Zusammenfassung**

Vorgeschlagen wird ein Verfahren zur Herstellung beschichteter Sterolpulver, bei dem man
a) mikronisierte Sterol- und/oder Stanolpartikel in einem Mischer vorlegt,
b) die mikronisierten Sterol und/oder Stanolpartikel mit einer proteinhaltigen wässrigen Lösung/Dispersion befeuchtet,
c) die befeuchteten Partikel gut durchmischt und anschließend trocknet, und
d) gegebenenfalls das getrocknete Gut in einer Mühle zerkleinert.

Die nach diesem Verfahren hergestellten sterolhaltigen Formulierungen lassen sich aufgrund ihrer guten Benetzbarkeit ohne größeren technischen Aufwand in Lebensmittel einarbeiten und zeigen insbesondere in Getränken und Milchprodukten gute organoleptische und sensorische Eigenschaften.

## Beschreibung

### Gebiet der Erfindung

Die Erfindung befindet sich auf dem Gebiet der Lebensmittel und betrifft ein Verfahren zur Herstellung gut benetzbarer Phytosterolhaltiger Formulierungen, die nach diesem Verfahren hergestellten Zubereitungen sowie Produkte, insbesondere Lebensmittel, die diese Formulierungen beinhalten.

### Stand der Technik

Aus der Anwendungstechnologie sind zahlreiche Formulierungsmöglichkeiten bekannt, um die als Cholesterinsenker eingesetzten, schlecht wasserlöslichen Phytosterole und -stanole in Lebensmittelzubereitungen oder pharmazeutische Produkte einarbeiten zu können.
In zahlreichen Patentanmeldungen wird beschrieben, wie die Verfügbarkeit von Sterolen über die Reduktion der Partikelgrößen vornehmlich durch Mikronisation verbessert werden kann. So beschreibt die deutsche Offenlegungsschrift DE 102 53 111 A1 pulverförmige Phytosterol-Formulierungen mit einer mittleren Teilchengröße von 0,01 bis 100 µm, die sich gut in Wasser redispergieren lassen. Bevorzugt werden hydrophile Hilfsstoffe als Schutzkolloide eingesetzt. Zur Herstellung der Pulver werden zum Nachteil der Ökologie und Verträglichkeit organische Lösungsmittel verwendet. Auch die Internationale Anmeldung WO 2005/074717 A1 verwendet eine Art Schutzkolloid durch die Einbettung von Sterolen in eine Matrix, die Proteine und Kohlenhydrate enthält. Der Gesamtgehalt an Sterolen in der Formulierung fällt jedoch durch den hohen Anteil an Hilfsstoffen gering aus.
Einen weiteren Prozess zur Herstellung einer Steroldispersion, in der die Partikelgrößenverteilung der Sterole bei 0,1 bis 30 µm liegt, entnimmt man den Internationalen Anmeldungen WO 03/105611 und WO 2005/049037**.** Wie in diesem Verfahren ist häufig die Mikronisation der Sterolpartikel alleine nicht ausreichend, um eine gute Einarbeitbarkeit zu erreichen. Zwar lässt sich durch die Erhöhung der Oberfläche die Bioverfügbarkeit der fein dispergierten Teilchen verbessern, jedoch sind gerade die mikronisierten Partikel schlecht benetzbar, aggregieren leicht und schwimmen auf wässrigen Oberflächen meistens auf. Nachteilig ist zusätzlich die thermische Belastung der Dispersionen während der Herstellung.
Häufig lässt sich das gemahlene Sterol nur mit speziellen Methoden in einem Getränk dispergieren, wozu intensives Mischen notwendig ist. Diese Geräte stehen jedoch im Normalfall dem Endanwender der Lebensmittelhersteller nicht zur Verfügung.

Daher kombinieren viele Hersteller die Mikronisation der Sterole mit der zusätzlichen Anwendung von Emulgatoren. Ein Beispiel dafür sind die in dem Europäischen Patent EP 0897671 B1 beanspruchten Zubereitungen mit Sterolen und Sterolestern mit einer Partikelgröße von maximal 15 µm in einem Gemisch mit ausgewählten Emulgatoren, wobei das Gewichtsverhältnis Emulgator zu Sterol in der wässrigen Phase weniger als 1:2 beträgt.
In der Internationalen Patentanmeldung WO 03/086468 A1 werden pulverförmige Sterolesterformulierungen mit einem geringen Proteingehalt und Mono- und Diglyceriden als Emulgatoren offenbart. Auch wenn diese sich durch eine gute Verträglichkeit auszeichnen und als Lebensmittelemulgatoren über einen langen Zeitraum bereits bekannt sind, versucht man die Menge der Emulgatoren zu verringern oder sie gar ganz zu vermeiden, da Emulgatoren auch die Bioverfügbarkeit weiterer in den Lebensmitteln vorhandener Substanzen beeinflussen oder die Stabilität der Formulierungen negativ verändern können.

Weitere Methoden zur Verbesserung der Löslichkeit und Dispergierbarkeit wie die Formulierung als Emulsionen, Microemulsionen, Dispersionen, Suspensionen oder die Komplexierung mit Cyclodextrinen oder Gallensalzen werden in der Internationalen Patentanmeldung WO 99/63841 A1 vorgestellt. Als Träger werden PEG, PVP, Copolymere, Celluloseether und - ester vorgeschlagen. Auch der direkte Einsatz von Lebensmittelgrundstoffen als Träger für pulverisierte Sterole in Form eines Premixes ist aus der EP 1 003 388 B1 bekannt. Die Auswahl von Proteinen als Trägersubstanzen für unveresterte Sterole und Stanole wird in der WO 01/37681 offenbart.

Insbesondere die Verarbeitung von unveresterten Sterolen und Stanolen, die noch weitaus hydrophober als ihre veresterten Derivate sind, stellt hohe Anforderungen an das Herstellverfahren. Freie, gemahlene Sterine weisen zudem den Nachteil auf, dass sie über eine geringe Mindestzündenergie (MZE < 3 mJ) verfügen, so dass diese Produkte als extrem sensitiv gegenüber Zündung eingestuft werden. Daher muss bei der Verwendung von freien Sterinen auf entsprechende Sicherheitsvorkehrungen geachtet werden.
Ein mögliches Verfahren zur Herstellung von sterolhaltigen Mikropartikeln kann man dem Europäischen Patent EP 1148793 B1 entnehmen. Es basiert auf einer energiereichen Homogenisation. Ein danach auf Basis wässriger Suspensionmittel hergestelltes Pulver hat jedoch eine unzureichende Homogenität und lässt sich nur schwer redispergieren. Nachteil vieler sterolhaltiger Pulverformulierungen ist das Agglomerationsverhalten der freien Sterole bei der Lagerung. Während der Lagerung, vor allem wenn unter Druck gelagert wird, beobachtet man starke Verbackungen bzw. Klumpenbildungen, die festen, unkontrollierten Agglomerate müssen wiederum zerkleinert werden, um dann verarbeitet werden zu können.

In der Internationalen Patentanmeldung WO 2006/020980 A1 werden Agglomerate aus Sterolpartikeln beschrieben. Das Herstellungsverfahren stellt eine aufbauende Granulierung eines Klebstoffgranulates dar, bei dem die mikronisierten Sterolpartikel mit einem Suspensionsmittel benetzt werden, in dem ein Binder teilweise oder ganz gelöst ist. Das Suspensionsmittel wird nach der Benetzung entfernt, so dass die verbleibenden Agglomerate eine Größe von 150 bis 850 µm aufweisen. Dieses Verfahren erfordert einen hohen apparativen Aufwand und muss sehr genau gesteuert werden, damit die hergestellten Agglomerate die gewünschte Stabilität haben.

Aufgabe der vorliegenden Erfindung war es, sterolhaltige Formulierungen zur Verfügung zu stellen, die mit einfachen und schnellen Prozessen herzustellen sind und eine gute und schnelle Dispergierung und Einarbeitung von unveresterten Sterolen und/oder Stanolen in Lebensmitteln ermöglichen, wobei die Formulierungen in den Lebensmitteln gute sensorische und organoleptische Eigenschaften aufweisen sollen.

### Beschreibung der Erfindung

Gegenstand der Erfindung ist Verfahren zur Herstellung beschichteter Sterolpulver, bei dem man
a) mikronisierte Sterol- und/oder Stanolpartikel in einem Mischer vorlegt,
b) die mikronisierten Sterol und/oder Stanolpartikel mit einer proteinhaltigen wässrigen Lösung/Dispersion befeuchtet,
c) die befeuchteten Partikel gut durchmischt und anschließend trocknet, und
d) gegebenenfalls das getrocknete Gut in einer Mühle zerkleinert.

Sprüht man während des Mischens des mikronisierten Pulvers die proteinhaltige wässrige Lösung lediglich auf, so kann überraschender Weise trotz Verwendung eines einfachen Pflugscharmischers nach der Trocknung (Schritt c) auf eine abschließende Vermahlung des Pulvers (Schritt d) verzichtet werden, ohne dass die Partikelgröße des beschichteten Sterolpulvers von der Größe des ursprünglich eingesetzten Gutes erheblich abweicht. Lediglich eine geringe Teilchengrößenvergrößerung kann detektiert werden.
Auch nach Durchführung des Schrittes d) soll die Partikelgrößenverteilung geringfügig größer als die der eingesetzten mikronisierten Sterolen und/oder Stanole sein.

Somit weisen die im Schritt a) eingesetzten Sterol- und/oder Stanolpartikel eine Teilchengrößenverteilung mit einem D_{90%} von maximal 100 µm, bevorzugt maximal 40 µm und besonders bevorzugt maximal 30 µm auf. Die Teilchengrößenverteilung wurde mit einem Gerät der Fa. Beckman Coulter, Typ LS 230 und berechnet als Volumenverteilung. Die Messung erfolgte in einer wässrigen Suspension.
Nach der Beschichtung durch Besprühen entsteht ein lockeres Granulat, das gegebenenfalls klassiert werden kann, so dass das Pulver eine Teilchengrößenverteilung mit einem D_{90%} von maximal 1000 µm aufweist. Erfolgt die Beschichtung durch Anteigen schließt sich in der Regel eine Vermahlung des getrockneten Gutes an, mit der dann die Teilchengröße auf das gewünschte Maß eingestellt werden kann.

Die Verwendung von proteinhaltigen wässrigen Überzugsmaterialien und besonders von Milchpulver oder Natriumcaseinat als Überzugsmaterial führt zu einer verbesserten Wasserdispergierbarkeit gegenüber Sterolformulierungen mit anderen hydrophilisierenden Hilfsstoffen wie sie bereits in der Internationalen Patentanmeldung WO 2006/020980 A1 beschrieben werden.
Das erfindungsgemäße Verfahren ermöglicht es Pulver auch mit freien unveresterten Sterolen und Stanolen herzustellen, die eine leichte Weiterverarbeitung der lipophilen Wirkstoffe in Lebensmitteln, insbesondere Getränken ermöglichen. Das Pulver hat eine geringe Agglomerationsneigung und somit gute Fließeigenschaften. Es zeichnet sich durch eine gute Homogenität aus und lässt sich aufgrund seiner verbesserten Benetzbarkeit ohne großen technischen Aufwand weiterverarbeiten, wobei auch eine homogene Verteilung in der Endformulierung schnell erreicht wird. Durch die Beschichtung der Steroloberfläche mit den hydrophilen Additiven werden die organoleptischen Eigenschaften und die Sensorik entscheidend verbessert. Das beschichtete Pulver klebt nicht an Zähnen und Mundschleimhaut, so dass der unangenehme Steringeschmack, der in den wirkstoffhaltigen Lebensmitteln zu erheblichen Geschmackseinbußen führt vollständig unterdrückt wird.

Durch die Anwendung hydrophilisierender proteinhaltiger Hilfsstoffe werden nicht nur Solubilisierungseigenschaften und Dispergiereigenschaften verbessert, überraschender Weise zeigen diese Pulver auch eine erhöhte Lagerstabilität gegenüber reinen gemahlenen Sterolen, die eine hohe Agglomerationstendenz aufweisen.

Das Verfahren erlaubt es bei der Verarbeitung von unveresterten Sterolen und Stanolen auf organische Lösungsmittel und ein Erhitzen des Gutes zu verzichten und trotz des wässrigen Mediums keine Emulgatoren mit hoher Oberflächenaktivität speziell vom Typ der Lecithine, Monoglyceride, Diglyceride, Polysorbate, Natriumstearyllactylat, Glycerolmonostearat, Milchsäureester und Polyglycerinester einzusetzen. Die geringen Emulgatoreigenschaften der hydrophilisierenden Hilfsstoffe, insbesondere der Caseinate und des Milchpulvers sind ausreichend, um die Homogenität des hergestellten Pulvers und eine leichte Redispergierbarkeit und Verarbeitbarkeit zu gewährleisten. Der Verzicht auf weitere Emulgatoren vereinfacht die Weiterverarbeitung durch Reduktion möglicher Inkompatibilitäten mit anderen Lebensmittelbestandteilen und verringert das Auftreten von Unverträglichkeiten beim Verbraucher.
Überraschender Weise haben andere Hilfsstoffe wie Glucose und Gummi arabicum trotz ihrer stark hydrophilen Eigenschaften keine so guten Dispergiereigenschaften wie Magermilchpulver oder Natriumcaseinat. Dieses Verhalten lässt sich möglicherweise dadurch erklären, dass sich Gummi arabicum und Glucose zu schnell im Wasser lösen und dadurch der Überzug von den Sterolen teilweise abgelöst wird, so dass der lipophile Charakter der Sterolpartikeloberfläche wieder verstärkt zum Ausdruck kommt.

Die erhaltenen Pulver zeichnen sich aus durch verbesserte Rieselfähigkeit, bessere Einrührbarkeit in Wasser und höheres Schüttgewicht im Vergleich zu üblichen feinvermahlenen Sterinen. Die beschichteten Pulver können durch einfaches Einrühren in wässrige Systeme, wie kaltes Wasser, Säfte oder Milch zugegeben werden.

Die Herstellung lässt sich mit einem sehr geringen apparativen Aufwand umsetzen. So ist der Mischprozess mit üblichen kommerziellen Pulvermischern durchführbar. Einfache Flügelrührwerke, Knetrührwerke oder Pflugscharmischer sind ausreichend für einen effektiven Mischvorgang. Dieser sollte in 1 bis maximal zwei Stunden abgeschlossen sein.

Das Befeuchten des mikronisierten Sterol und/oder Stanolpulvers kann dann durch einfaches Besprühen mit der proteinhaltigen wässrigen Lösung oder durch direkte Zugabe der Lösung in das Rührwerk (Anteigen) stattfinden. Herkömmliche Coatingverfahren, wie beispielsweise Wirbelschichtverfahren oder Extrusionsverfahren sollen nicht ausgeschlossen sein, vorzuziehen sind auf Grund des apparativen Aufbaus jedoch einfache Rührwerke mit Sprühvorrichtung.

Für die Trocknung (Schritt c) bieten sich übliche Trocknungsverfahren wie Vakuumtrocknung oder Sprühtocknung an, auch hier ist eine Vakuumtrocknung ausreichend, um ein feines rieselfähiges Pulver zu erhalten.
Wählt man zum Befeuchten das Anteigen mit der proteinhaltigen Lösung so ist je nach Agglomeration und Teilchengrößenverteilung nach der Vakuumtrocknung ein anschließender Mahlvorgang notwendig, um die gewünschte Teilchengrößenverteilung zu erhalten. Die im Schritt d) zur Mahlung einzusetzende Mühle sollte auf einem Rotor-Stator-Prinzip beruhen oder eine Kugelmühle sein. Der apparative Aufwand der Herstellungsapparatur ist auch dann noch sehr gering. Auf eine Kühlung des Mahlgutes kann auf Grund des sehr geringen Aufheizens der Formulierung verzichtet werden.

Das nach der Trocknung resultierende Pulver weist einen sehr hohen Steringehalt von mindestens 90 Gew. %, bevorzugt mindestens 93 Gew.% und besonders bevorzugt mindestens 95 Gew. % bezogen auf das Gesamtgewicht des beschichteten Pulvers auf.
Ein weiterer Gegenstand sind daher pulverförmige beschichtete Sterolzubereitungen bestehend aus Partikeln, die einen Kern aus Sterolen und/oder Stanolen sowie gegebenenfalls weiteren lipophilen Hilfsstoffen und eine Beschichtung aus Natrium- und/oder Milchpulver sowie gegebenenfalls weiteren hydrophilen Hilfsstoffen, enthalten, mit der Maßgabe, dass die Sterolzubereitung mindestens 90 Gew. %, bevorzugt mindestens 93 Gew. % und besonders bevorzugt mindestens 95 Gew. % Sterole und/oder Stanole bezogen auf die Gesamtformulierung enthält. Vorzugsweise sind die beschichteten Formulierungen frei von Emulgatoren mit hoher Oberflächenaktivität, insbesondere solchen, die ausgewählt sind aus der Gruppe, die gebildet wird von Lecithinen, Monoglyceriden, Diglyceriden, Polysorbaten, Natriumstearyllactylat, Glycerolmonostearat, Milchsäureestern und Polyglycerinestern

Die durch dieses Verfahren hergestellten sterolhaltigen Formulierungen können auf einfache Weise in Lebensmittel, insbesondere in Milch, Milchgetränke, Molke-, Joghurtgetränke, Margarine, Fruchtsäfte, Fruchtsaftgemische, Fruchtsaftgetränke, Gemüsesäfte, Kohlensäurehaltige und kohlensäurefreie Getränke, Sojamilchgetränke oder proteinreiche flüssige Nahrungsersatzgetränke, sowie fermentierte Milchzubereitungen, Joghurt, Trinkjoghurt, oder Käsezubereitungen, aber auch in pharmazeutische Zubereitungen eingearbeitet werden.
Ein weiterer Gegenstand der Erfindung betrifft Lebensmittelzubereitungen, die die Sterol/Stanolformulierungen der genannten Zusammensetzung enthalten. Sie werden bevorzugt in Getränken und Milchprodukten eingesetzt, die dann 0,1 bis 50 Gew.-%, bevorzugt 1 bis 20 Gew.-% der pulverförmigen beschichteten Zubereitungen bezogen auf das Gesamtgewicht der Lebensmittel, enthalten.

### Sterol- und/oder Stanol

In der vorliegenden Erfindung werden aus Pflanzen und pflanzlichen Rohstoffen gewonnene Sterole, sogenannte Phytosterole und Phytostanole eingesetzt. Bekannte Beispiele sind Ergosterol, Brassicasterol, Campesterol, Avenasterol, Desmosterol, Clionasterol, Stigmasterol, Poriferasterol, Chalinosterol, Sitosterol und deren Mischungen, darunter werden bevorzugt β-Sitosterol und Campesterol verwendet. Ebenso fallen die hydrierten gesättigten Formen der Sterole, der sogenannten Stanole unter die eingesetzten Verbindungen, auch hier werden β-Sitostanol und Campestanol bevorzugt. Als pflanzliche Rohstoffquellen dienen unter anderem Samen und Öle von Sojabohnen, Kanola, Palmkernen, Mais, Kokos, Raps, Zuckerrohr, Sonnenblume, Olive, Baumwolle, Soja, Erdnuss oder Produkte aus der Tallölproduktion.

### Proteinhaltige Hilfsstoffe und/oder Proteine

Als proteinhaltige Hilfsstoffe und Proteine werden bevorzugt Milchpulver und/oder Molkepulver und/oder Casein und/oder Caseinate eingesetzt. Milchpulver wie handelsübliche Vollmilch- und Magermilchpulver, die aus den jeweiligen Milchqualitäten durch Trocknung gewonnen worden sind, sind besonders geeignet. Sie können in Mischungen mit weiteren Proteinen oder als alleiniger Trägerstoff eingesetzt werden. Werden weitere Proteine zugesetzt oder Proteine anstelle des Milchpulvers als Trägerstoff verwendet, so sind darunter isolierte Proteine zu verstehen, die aus natürlichen tierischen und pflanzlichen Quellen gewonnen werden und bei der Herstellung der pulverförmigen Zubereitungen zugesetzt werden. Mögliche Quellen für Proteine stellen Pflanzen wie Weizen, Soja, Lupine, Mais oder Quellen tierischen Ursprungs wie Eier oder Milch dar.

Magermilchpulver ist im Sinne der vorliegenden Erfindung besonders bevorzugt, da es ausreichend hydrophilisierende Eigenschaften hat ohne deshalb auch gleichzeitig die eingangs beschriebenen Nachteile solcher Lebensmittelemulgatoren zu zeigen, die sonst üblicherweise speziell für die Herstellung von Getränken und Milchprodukten, speziell Fermentationsprodukten wie Joghurt verwendet werden. Außerdem überdeckt Magermilchpulver den typischen unangenehmen Sterolgeschmack am besten und Formulierungen mit diesm Additiv haben verbesserte sensorische Eigenschaften gegenüber anderen Hilfsstoffen. Es hat sich gezeigt, dass mit Magermilchpulver und Natriumcaseinat überzogene Sterolformulierungen besonders gute Dispergiereigenschaften aufweisen, da sie einerseits eine ausreichendgute Hydrophilie haben, um die Benetzbarkeit in wässrigen Systemen zu erhöhen und andererseits keine zu gute Wasserlöslichkeit aufweisen, um von der Steroloberfläche direkt abgelöst zu werden. Eine Menge von maximal 10 Gew. %, bevorzugt maximal 7 Gew. % und besonders bevorzugt maximal 5 Gew. % bezogen auf das Gesamtgewicht des beschichteten Pulvers ist ausreichend, um die verbesserten Dispergier-und Verarbeitungseigenschaften zu erreichen. Dadurch, dass das mikronisierte Sterol nur überzogen und nicht in einer größeren Menge der hydrophilisierenden Hilfsstoffe eingebettet wird wie in der Internationalen Anmeldung WO 2005/074717 A1 beschrieben, kann der Gesamtgehalt an Sterolen in der Formulierung sehr hoch gehalten werden.

### Weitere Hilfsstoffe

Als weitere Hilfsstoffe können die erfindungsgemäßen Zubereitungen Antioxidantien, Konservierungsmittel und Fließverbesserungsmittel enthalten. Beispiele für mögliche Antioxidantien oder Konservierungsmittel sind Tocopherole, Lecithine Ascorbinsäure, Parabene, Butylhydroxytoluol oder -anisol, Sorbinsäure oder Benzoesäure und deren Salze. Bevorzugt werden Tocopherole als Antioxidantien eingesetzt.
Als Fließregulierungs- und verbesserungsmittel kann Siliciumdioxid eingesetzt werden.

### Beispiele

### Beispiel 1 - Überzug durch Aufsprühen und Trocknen

450 g mikronisiertes Sterinpulver (Vegapure® FTE, Cognis Deutschland) Partikelgröße < 100 µm) wurden in einem Labormischer (Lödige, Typ M5R) bei Raumtemperatur vorgelegt. Unter Mischen (Drehzahl 50%) wurde eine Lösung von 50 g Magermilchpulver (Sprühmagermilchpulver ADPI Grade, Lieferant: Fa. Almil Bad Homburg) in 300 g Wasser (60°C) aufgedüst (Sprühdauer 5 Min.). Es wird 30 Min. bei 30-40°C gemischt (Drehzahl 15%). Anschließend wurde im Vakuum bei 60°/1 mbar auf einen Wassergehalt < 5% getrocknet. Es resultierte ein feines Granulat mit verbesserter Rieselfähigkeit, besserer Einrührbarkeit in Wasser und höherem Schüttgewicht im Vergleich zum eingesetztem Sterinpulver.

### Beispiel 2 - Überzug durch Aufsprühen und Trocknen

450 g Sterinpulver (Vegapure FTE, Cognis Deutschland, Partikelgröße < 100 µm) wird in einem Labormischer (Lödige, Typ M5R - Pflugscharmischer) bei Raumtemperatur vorgelegt. Unter Mischen (Drehzahl 50%) wurde eine Lösung von 50 g Magermilchpulver (Sprühmagermilchpulver ADPI Grade, Lieferant: Fa. Almil Bad Homburg) in 250 g Wasser (60°C) aufgedüst (Sprühdauer 5 Min.). Anschließend wurde 30 Min. bei 30-40°C weitergemischt (Drehzahl 15%).
Danach wurde im Vakuum auf einen Wassergehalt < 5% getrocknet (Simulation einer Reaktortrocknung durch einen Rotationsverdampfer/ Badtemperatur 70°C/ Druck: 40 mbar/ Dauer 2h).
Es resultierte ebenfalls ein feines Granulat mit verbesserter Rieselfähigkeit, Wasserbenetzbarkeit und höherem Schüttgewicht.

### Beispiel 3 - Überzug durch Anteigen, Trocknen und Vermahlen

### a) 7 Gew. % Magermilchpulver bezogen auf die Endformulierung (hydrophilisiertes Sterolpulver)

85 g Magermilchpulver (Sprühmagermilchpulver ADPI Grade, Lieferant: Fa. Almil Bad Homburg) wurden in 1125 g VE-Wasser bei 80°C gelöst. In einem Kneter (Küchenmaschine Fa. Braun) wurden 1125 g mikronisiertes Sterol (Vegapure® FTE) vorgelegt und die Milchpulver - Lösung zugegeben. Hierbei entstand ein glatter Teig, der im Vakuumtrockenschrank (50°C/<50 mbar) getrocknet wurde und anschließend in der Schneid-Mühle (Grindomix GN 200 Fa. Retsch; Bedingungen: 2000 Upm, 30 Sekunden) vermahlen wurde.

Analog Beispiel 3 wurden folgende hydrophile Überzüge aufgebracht:
3 b) 5 Gew. % Magermilchpulver
3 c) 10 Gew. % Magermilchpulver
3 d) 10 Gew. % Na-Caseinat (Fa. Meggle, Emulac Na)
3 e) 5 Gew. % getrockneter Glucosesirup (Fa. Roquette, Glucidex IT 33)
3 f) 5 Gew. % Gummi Arabicum (Fa. Alfred L. Wolff, Gummi Arabicum Type 8074)

Alle nach Beispiel 3 hergestellten hydrophilisierten Sterolpulver zeichneten sich durch eine gute Riesel-, Schütt-, und Fließfähigkeit und durch eine gute Lagerfähigkeit ohne Verklumpung aus. In der Wasserdispergierbarkeit zeigten die verschieden überzogenen Sterolpulver jedoch starke Unterschiede:
Die nach Beispiel 3 hergestellten Sterolpulver wurden in Wasser bei Raumtemperatur dispergiert. Hierzu wurden ca. 250 ml der zu untersuchenden Flüssigkeit in ein Becherglas gegeben und mit 100 rpm gerührt. Zu der gerührten Flüssigkeit wurden 2,5 g des jeweiligen Pulvers zugegeben und das Dispergierverhalten bewertet.

**Tabelle 1: Wasserdispergierbarkeit von unterschiedlich überzogenen Sterolpulvern**

| **Hydrophiler Überzug** | **5 Gew. %** | **10 Gew. %** |
|---|---|---|
| Magermilchpulver | Gut | Sehr gut |
| Natriumcaseinat | - | Sehr gut |
| Glucose | Schlecht | - |
| Gummi arabicum | Schlecht | - |

Überraschender Weise haben Glucose und Gummi arabicum trotz ihrer stark hydrophilen Eigenschaften keine so guten Dispergiereigenschaften wie Magermilchpulver oder Natriumcaseinat. Große Teile der mit Glucose und Gummi arabicum überzogenen Sterolpartikel schwammen auf und blieben an der gerührten Wasseroberfläche.

## Patentansprüche

1. Verfahren zur Herstellung beschichteter Sterolpulver, bei dem man
a) mikronisierte Sterol- und/oder Stanolpartikel in einem Mischer vorlegt,
b) die mikronisierten Sterol und/oder Stanolpartikel mit einer proteinhaltigen wässrigen Lösung/Dispersion befeuchtet,
c) die befeuchteten Partikel gut durchmischt und anschließend trocknet, und
d) gegebenenfalls das getrocknete Gut in einer Mühle zerkleinert

2. Verfahren zur Herstellung beschichteter Sterolpulver nach Anspruch 1, **dadurch gekennzeichnet, dass** das Protein oder der proteinhaltige Hilfsstoff ausgewählt wird aus Milchpulver und/oder Caseinaten.

3. Verfahren zur Herstellung beschichteter Sterolpulver nach den Ansprüchen 1 und/oder 2, **dadurch gekennzeichnet, dass** man die mikronisierten Sterol und/oder Stanolpartikel mit einer proteinhaltigen wässrigen Lösung/Dispersion besprüht, so dass nach der Trocknung der Partikel keine weitere Zerkleinerung (Schritt d)) erfolgt.

4. Verfahren zur Herstellung beschichteter Sterolpulver nach mindestens einem der Ansprüche 1 bis 3, **dadurch gekennzeichnet, dass** die Partikelgrößenverteilung in Form des D_{90%} des beschichteten Pulvers nach Durchführung des Schrittes d) größer ist, als der D_{90%} der im Schritt a) eingesetzten mikronisierten Sterol- und/oder Stanolpartikel.

5. Verfahren zur Herstellung beschichteter Sterolpulver nach mindestens einem der Ansprüche 1 bis 4, **dadurch gekennzeichnet, dass** im Schritt a) Sterol- und/oder Stanolpartikel einer Teilchengrößenverteilung mit einem D_{90%} von maximal 50 µm eingesetzt werden und nach Durchführung des Schrittes d) die Partikelgrößenverteilung einen D_{90%}. von maximal 1000 µm aufweist.

6. Verfahren zur Herstellung beschichteter Sterolpulver nach mindestens einem der Ansprüche 1 bis 5, **dadurch gekennzeichnet, dass** ein Pflugscharmischer im Schritt a) eingesetzt wird.

7. Pulverförmige beschichtete Sterolzubereitung, erhältlich durch das Verfahren gemäß mindestens einem der Ansprüche 1 bis 6.

8. Lebensmittel, enthaltend 0,1 bis 50 Gew.-% der pulverförmigen beschichteten Sterolzubereitung nach Anspruch 7.

9. Getränke und Milchprodukte, enthaltend 0,1 bis 50 Gew.-% der pulverförmigen beschichteten Sterolzubereitung nach Anspruch 7.

10. Pulverförmige beschichtete Sterolzubereitungen bestehend aus Partikeln, die einen Kern aus Sterolen und/oder Stanolen sowie gegebenenfalls weiteren lipophilen Hilfsstoffen und eine Beschichtung aus Natrium- und/oder Milchpulver sowie gegebenenfalls weiteren hydrophilen Hilfsstoffen, enthalten,
mit der Maßgabe, dass die Sterolzubereitung mindestens 90 Gew. % Sterole und/oder Stanole bezogen auf die Gesamtformulierung enthält.
